# EUROPÄISCHE PATENTSCHRIFT

(11) **EP 0 669 528 B1**
(45) Veröffentlichungstag und Bekanntmachung des Hinweises auf die Patenterteilung: **28.04.1999**
(21) Anmeldenummer: 95101033.9
(22) Anmeldetag: 26.01.1995
(51) Int. Cl.: G01N 21/90

(54) **Verfahren und Vorrichtung zur Prüfung der Seitenwand eines Behälters**
Method and device for the examination of the side wall of a container
Procédé et appareil pour examiner la paroi latérale d'un récipient

(30) Priorität: 24.02.1994 CH 553/94
(43) Veröffentlichungstag der Anmeldung: 30.08.1995
(73) Patentinhaber: ELPATRONIC AG, CH-6303 Zug (CH)
(72) Erfinder: Burri, Karl-Georg, CH-8942 Oberrieden (CH)

(56) Entgegenhaltungen:
- EP-A- 0 037 694
- EP-A- 0 415 154
- EP-A- 0 433 666
- GB-A- 2 165 942
- US-A- 4 280 624
- US-A- 4 750 035

## Beschreibung

Die Erfindung betrifft ein Verfahren gemäss Oberbegriff des Anspruchs 1. Ferner betrifft die Erfindung eine Vorrichtung zur Durchführung des Verfahrens.

Es ist bekannt, die Seitenwände von Behältern optisch zu prüfen. Insbesondere wird dies bei Mehrwegbehältern (z.B. Mehrwegflaschen aus Glas oder Kunststoff) vorgenommen. Dabei wird der Behälter z.B. vor einer Zeilenkamera um 360° gedreht, so dass die ganze Behälterwandung zeilenweise abgetastet wird. Aus US-A-4 750 035 und GB-A-2 165 942 sind Verfahren gemäss Oberbegriff bekannt, bei welchen Behälter zwischen Abbildungsstationen gedreht werden.

Da die Prüfung der Behälter im Falle von Mehrwegflaschen in einem industriellen Umfeld und mit sehr hoher Geschwindigkeit geschehen muss (es werden heute in Abfüllbetrieben Förderanlagen mit einem Flaschendurchsatz von 30'000 bis 60'000 Flaschen pro Stunde betrieben), besteht einerseits die Aufgabe, eine Seitenwandprüfung zu ermöglichen, welche den Behälterdurchsatz auf einer Förderanlage nicht beeinträchtigt. Andererseits sollte die Aufnahme in möglichst zur Bildauswertung geeigneter Form und möglichst kostengünstig erfolgen.

Diese Aufgabe wird bei einem Verfahren der eingangs genannten Art mit den kennzeichnenden Merkmalen des Anspruchs 1 gelöst.

Ferner wird die Aufgabe, eine entsprechende Vorrichtung bereitzustellen, durch eine Vorrichtung gemäss Anspruch 3 gelöst.

Durch das Anbringen mehrerer Abbildungsstationen entlang des Förderweges, welche jeweils nur einen Seitenwandabschnitt abbilden, ergibt sich eine sehr rasche Prüfmöglichkeit. Dabei werden alle Seitenwandabschnitte von einem Bildaufnahmegerät aufgenommen, was eine besonders kostengünstige Lösung ergibt; die mehrfache Umlenkung ergibt einen langen Strahlengang und damit eine für die Auswertung vorteilhafte Betrachtung.

Im folgenden werden Ausführungsbeispiele der Erfindung anhand der Zeichnungen näher erläutert. Dabei zeigt:
Figur 1 schematisch einen Teil einer Flaschenfördereinrichtung zur Durchführung des Verfahrens;
Figur 2 schematisch einen Teil einer weiteren Flaschenfördereinrichtung zur Durchführung des Verfahrens;
Figur 3 schematisch die Abbildung von Flaschenseitenwandabschnitten;
Figur 4 schematisch eine weitere Einrichtung mit einem halbdurchlässigen Spiegel und einer Kamera; und
Figur 5 schematisch ebenfalls eine Einrichtung mit halbdurchlässigem Spiegel und einer Kamera.

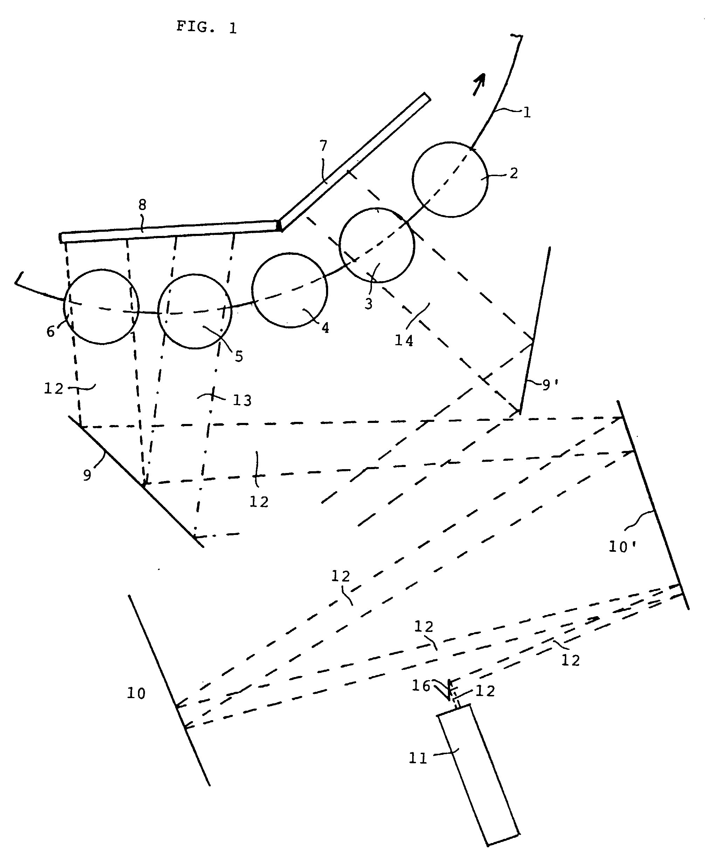

Figur 1 stellt grob schematisch einen Teil einer Behälterförderanlage für durchsichtige Behälter, insbesondere für Mehrweg-PET-Flaschen, dar. Die Förderanlage umfasst dabei ein Karussell 1 für die Flaschen, welches nur zum Teil und mit den Flaschen 2,3,4,5 und 6 dargestellt ist und diese in Pfeilrichtung fördert. Auf dem ganzen Karussell befinden sich natürlich mehr Flaschen und es sind in der Regel am Karussell eine Reihe von Prüfstationen angeordnet, welche z.B. das Vorhandensein von Restflüssigkeit, das Vorhandensein gefährlicher Stoffe, den Zustand des Flaschenbodens usw. prüfen.

Vorliegend wird auf optischem Weg die gesamte Seitenwand jeder Flasche geprüft. In Figur 1 sind dazu Beleuchtungseinrichtungen 7 und 8 vorgesehen, welche jeweils Abschnitte der Seitenwand durchleuchten. Als Beleuchtungseinrichtungen kommen dabei Blitzlampen oder gepulst betriebene LED-Arrays infrage. Auch eine Dauerbeleuchtung, ebenfalls mit Lampen oder Leuchtdioden ausgerüstet, ist möglich, wenn beim Bildaufnahmegerät ein Verschluss oder eine ähnliche Einrichtung vorgesehen ist, die sicherstellt, dass von den bewegten Flaschen jeweils nur eine kurzzeitige, unverwischte Aufnahme gemacht wird.

In dem gezeigten Beispiel werden jeweils Seitenwandabschnitte der Flaschen 2,3,5 und 6 gleichzeitig von einer Videokamera 11 aufgenommen. Dabei ist in der Figur 1 nur ein Strahlengang 12 von der Beleuchtungseinrichtung 8 zur Flasche 6 und zur Kamera 11 vollständig gezeigt. Die Strahlengänge für die weiteren Flaschen sind nur teilweise angedeutet (Flasche 5 mit Strahlengang 13, Flasche 3 mit Strahlengang 14) bzw. sind gar nicht dargestellt (Flasche 2), um die Figur übersichtlich zu gestalten. Der aufzunehmende Abschnitt der Seitenwand der Flasche 6 wird dabei von der Beleuchtungseinrichtung 8 beleuchtet und am ersten Spiegel 9 zum Spiegel 10' hin gespiegelt und von dort zum Spiegel 10, erneut zum Spiegel 10' und von dort über die Spiegelanordnung 16 zur Kamera 11. Es ist ersichtlich, dass auch die gleichzeitig aufzunehmenden Seitenwandabschnitte der Flaschen 5, 3 und 2 auf analoge Weise mittels der Spiegel 9, 9', 10, 10' und 16 auf die Kamera abgebildet werden. Das momentane, von der Kamera aufgenommene Bild beinhaltet also vier Seitenwandabschnitte gleichzeitig, je einen der Flaschen 6,5,3 und 2, die über die beiden spiegelnden Flächen des V-förmigen Spiegels 16 zur Kamera gelangen.

Die Flaschen werden weiter gefördert, was dazu führt, dass in einem späteren Zeitpunkt die Flasche 6 diejenige Position einnimmt, die in Figur 1 von der Flasche 5 eingenommen wird. Analog befindet sich zu diesem Zeitpunkt die Flasche 5 von Figur 1 an derjenigen Stelle, die in Figur 1 von der Flasche 4 besetzt ist. An die Position der Flasche 6 in Figur 1 ist zu diesem Zeitpunkt eine weitere Flasche gerückt, die in Figur 1 nicht ersichtlich ist. Die Flasche 2 von Figur 1 ist zu diesem Zeitpunkt nicht mehr im Bereich der Seitenwandprüfung. Bei der Förderung der Flaschen im Bereich der Seitenwandprüfung werden diese um ihre Vertikalachse gedreht. Bei der Förderung der Flasche 6 von der Position in Figur 1 zu der Position, bei welcher die nächste Bildaufnahme erfolgt (Position der Flasche 5 in Figur 1) findet-im gezeigten Beispiel einer Drehung so statt, dass ein um 90° verschobener Seitenwandabschnitt der Flasche abgebildet wird. Entsprechend werden auch die anderen Flaschen gedreht und die nächste Aufnahme mittels der Kamera 11 zeigt also wieder vier Seitenwandabschnitte, wobei gegenüber der vorgängigen Aufnahme von den Flaschen 6,5 und 3 jeweils andere Seitenwandabschnitte aufgenommen werden, da die Flaschen ja gedreht wurden. Der Vorgang wiederholt sich stetig. Bei jeder neuen Aufnahme werden wieder vier neue Seitenwandabschnitte über den V-Spiegel 16 aufgenommen. Mit anderen Worten, z.B. die in Figur 1 gezeigte Flasche 6 wird entlang des dargestellten Förderabschnittes viermal von der Kamera 11 aufgenommen, wobei jedesmal ein anderer Seitenwandabschnitt aufgenommen wird, da die Flasche 6 sich beim Durchlauf durch den Förderwegabschnitt um ihre eigene Achse dreht. Dabei erfolgen die Aufnahmen so, dass sich in der Regel die nacheinander aufgenommenen Seitenwandabschnitte der gleichen Flasche überlappen. Die Drehung der Flaschen um ihre Achse kann durch an sich bekannte Antriebselemente bewirkt werden, die in den Figuren nicht dargestellt sind. Es kommt z.B. ein Drehantrieb mittels einer unterhalb des Karussels angeordneten Kurvensteuerung in Frage oder ein Schrittmotorantrieb.

Natürlich kann der Abbildungsweg auch auf andere Weise als mit den dargestellten Spiegeln 9, 9', 10, 10' und 16 realisiert sein. Beabsichtigt ist aber durch die mehrfache Umlenkung ein möglichst langer Strahlengang, damit eine möglichst parallele Betrachtung der Flaschenseitenwände durch die Kamera 11 erfolgt. Ferner ist es bevorzugt, dass die Kamera in vertikaler Richtung unterhalb der Flaschenmitte angeordnet ist und demzufolge zur Flasche hin nach oben gerichtet ist. Dies erlaubt eine gute Betrachtung der sogenannten "wear bands" der Flasche und erlaubt es, über den Flaschendom hinwegzusehen.

Die Auswertung der aufgenommenen Bilder erfolgt auf bekannte Weise durch maschinelle Analyse der Bilder. Dabei muss natürlich die Zuordnung der jeweiligen Seitenwandabschnitte zu den Flaschen gewährleistet sein, da jede Flasche auf vier Bildern vorhanden ist. Die Erkennung von Beschädigungen oder Verunreinigungen der Flaschen mittels der aufgenommenen Bilder führt auf bekannte Weise zur Aussonderung der entsprechenden Flaschen.

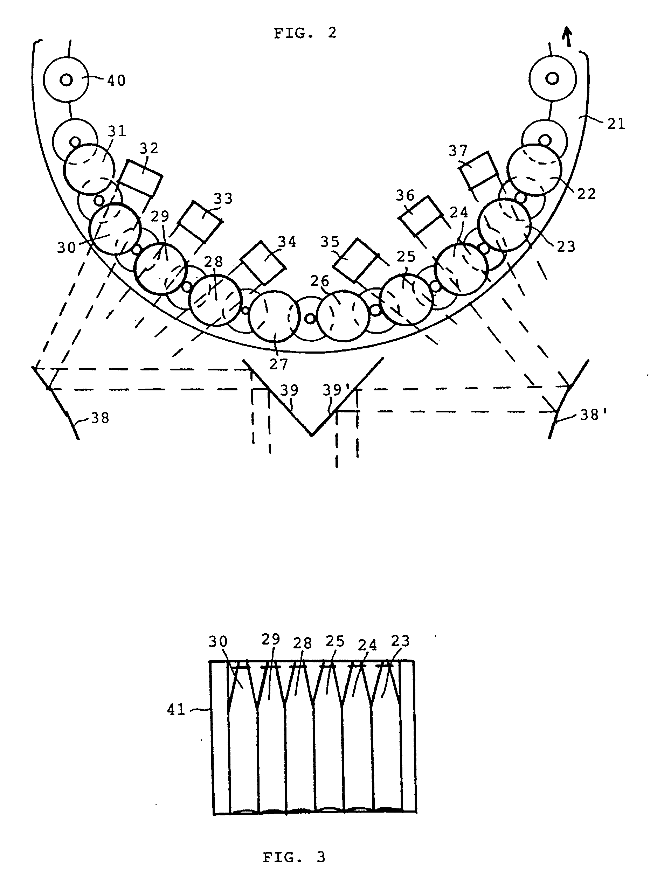

Figur 2 zeigt ein weiteres Beispiel mit einem Förderkarussell 21 und sechs Prüfstationen mit den Beleuchtungseinrichtungen 32 bis 37, für welche das vorstehend Ausgeführte ebenfalls gilt. In diesem Beispiel werden von sechs Flaschen 23,24,25 und 28,29,30 gleichzeitig Seitenwandabschnitte von einer (oder mehreren Kameras aufgenommen (in Figur 2 nicht dargestellt). Der Strahlengang verläuft dabei, wie anhand der Flaschen 24 und 30 dargestellt, über die Spiegel 38', 39' bzw. 38, 39. Für die übrigen Flaschen ist jeweils nur der Beginn des Strahlenganges angedeutet. Auch bei diesem Beispiel werden die Flaschen entlang ihres Förderweges mittels Antriebselementen 40 gedreht, so dass bei jeder Aufnahmeposition ein anderer Seitenwandabschnitt aufgenommen wird. Entsprechend der sechs Aufnahmestationen in Figur 2 erfolgt jeweils eine Drehung der Flaschen so, dass ein um 60° verschobener Abschnitt der Flaschenseitenwand abgebildet wird. Zwischen den Positionen der Flaschen 26 und 27 in Figur 2 erfolgt keine Drehung bzw. eine Drehung erfolgt nur zwischen den Positionen der Flaschen 25 und 28, da ja dazwischen keine Aufnahme erfolgt. Dies gilt natürlich entsprechend auch für die Position der Flasche 4 von Figur 1.

Figur 3 zeigt schematisch ein Bild 41, welches jeweils einen Seitenwandabschnitt der Flaschen 23, 24,25 und 28,29,30 wiedergibt, also der momentanen Aufnahmesituation der Figur 2 entspricht. Eine andere bevorzugte Abbildungsart bringt drei Seitenwandabschnitte in liegender Position (also gegenüber Figur 3 um 90° gedreht) auf der lichtempfindlichen Fläche der Kamera zur Abbildung. Damit wird in der Regel der CCD-Chip der Kamera gut ausgenützt und es ergibt sich eine gute Auflösung. Es werden dann bei jeweiliger 60° Betrachtung der Flaschenseitenwände zwei solcher Kamerabilder benötigt. Die Betrachtung der Flaschen in jeweils sechs Abschnitten, also jeweils um 60° verschoben, anstelle von weniger Abschnitten, hat den Vorteil, dass kein bzw. geringerer Randabfall des Lichtes erfolgt und dass Defekte im Randbereich besser erkennbar sind.

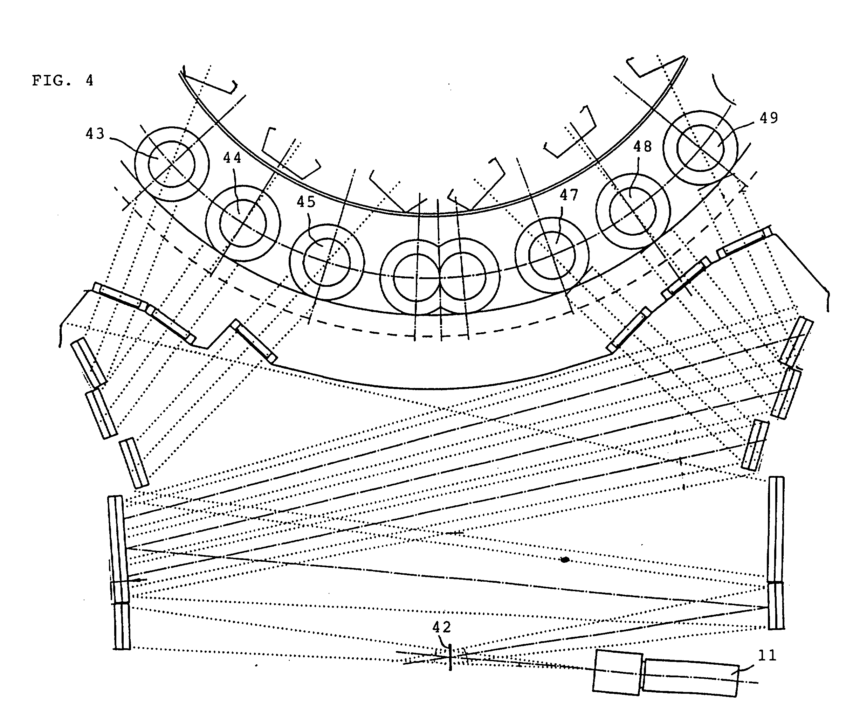

Figur 4 zeigt schematisch eine Anordnung zur Aufnahme jeweils dreier Seitenwandabschnitte in einem Bild. Dabei ist ein halbdurchlässiger Spiegel 42 im Strahlengang vor der Kamera 11 angeordnet. Es können dann einmal die Flaschen 43,44,45 beleuchtet werden und die Aufnahme der drei Flaschenseitenwandabschnitte erfolgt derart, dass das Licht durch den Spiegel 42 hindurchtritt. Danach werden die Flaschen 47,48,49 beleuchtet und die Abbildung der drei Seitenwandabschnitte erfolgt durch Spiegelung des Lichtes am Spiegel 42.

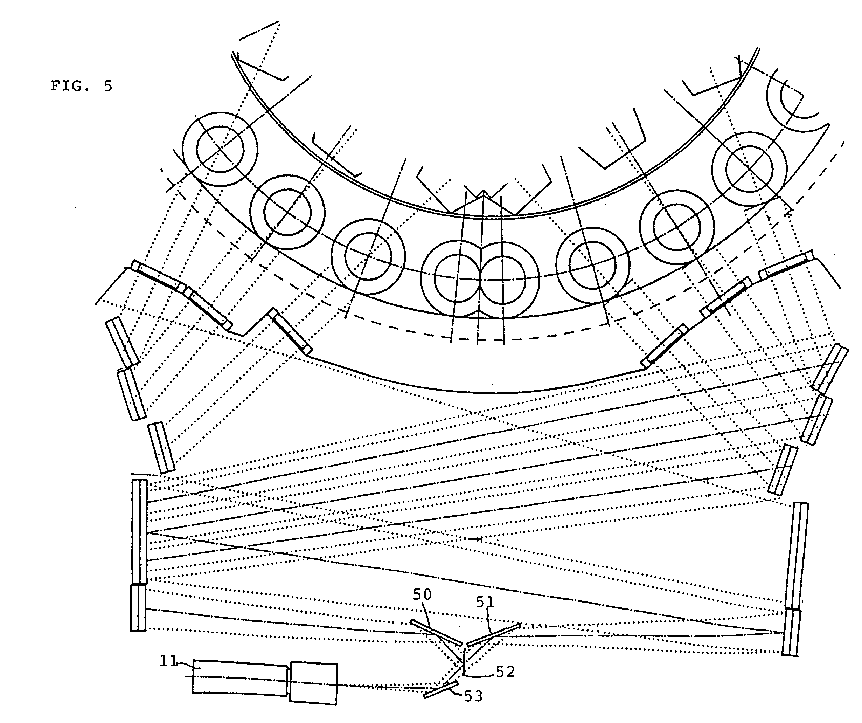

Figur 5 zeigt nur den kameranahen Bereich einer weiteren Einrichtung, welche ansonsten wie die Einrichtung von Figur 4 ausgestaltet ist. Dabei sind die beiden Spiegel 50 und 51 und der halbdurchlässige Spiegel 52 vorgesehen. Bei der Aufnahme jeweils dreier Seitenwandabschnitte mittels der Kamera 11 geht der Strahlengang dabei in einen Fall von links via den Spiegel 50 und mittels Reflektion am Spiegel 52 zur Kamera. Im anderen Fall geht der Strahlengang via den Spiegel 51 und durch den Spiegel 52 hindurch zur Kamera 11, wobei jeweils noch der Spiegel 53 die Strahlen in der Kameraachse umlenkt.

Auf die geschilderte Weise können mit einer Kamera in hoher Kadenz und guter Auflösung die Seitenwände von Behältern aufgenommen werden, was die rasche Prüfung derselben erlaubt.

## Patentansprüche

1. Verfahren zur Prüfung der Seitenwand eines Behälters (2, 3, 4, 5, 6) durch deren optische Abbildung und Auswertung des von einem Bildaufnahmegerät (11) aufgenommenen Bildes, wobei eine Mehrzahl von Behältern entlang einer Förderstrecke (1) gefördert werden und dabei eine Reihe von Abbildungsstationen passieren und bei jeder Abbildungsstation ein Seitenwandabschnitt des jeweiligen Behälters von dem Aufnahmegerät (11) aufgenommen wird, und dass bei der Förderung der Behälter diese jeweils gedreht werden, so dass von jedem Behälter an aufeinanderfolgenden Abbildungsstationen jeweils ein anderer Seitenwandabschnitt aufgenommen wird, wobei das eine Aufnahmegerät (11) mehreren Abbildungsstationen gemeinsam ist und das Abbild der Seitenwandabschnitte verschiedener Behälter aufnimmt, dadurch gekennzeichnet, dass der Strahlengang von der jeweiligen Abbildungsstation zum Aufnahmegerät (11) mehrfach umgelenkt wird, und dass zusätzlich zur besagten mehrfachen Umlenkung im Strahlengang ein halbdurchlässiger Spiegel und/oder ein V-förmiger Spiegel angeordnet ist, wodurch die Abbilder auf das eine Aufnahmegerät (11) gelenkt werden.

2. Verfahren nach Anspruch 1, dadurch gekennzeichnet, dass das Bildaufnahmegerät unterhalb der Behältermitte angeordnet ist.

3. Vorrichtung zur Durchführung des Verfahrens nach einem der Ansprüche 1 oder 2, mit einer Behälterfördereinrichtung (1) mit Mitteln zur Drehung der Behälter (2, 3, 4, 5, 6), einer Mehrzahl entlang des Förderweges im Bereich der Drehmittel angeordneter Abbildungsstationen, und einem Bildaufnahmegerät (11) zur Aufnahme des von den Abbildungsstationen erzeugten Bildes des jeweiligen Behälterseitenwandabschnittes, und wobei die Abbildungsstationen jeweils eine Beleuchtungseinrichtung (7, 8) umfassen, dadurch gekennzeichnet, dass der Strahlengang (12, 13, 14) von der jeweiligen Abbildungsstation (7, 8) zum Bildaufnahmegerät (11) mehrfach mittels Spiegeln (9, 9', 10, 10', 38, 38', 53) umgelenkt wird, und dass, zusätzlich zur besagten mehrfachen Umlenkung, vor dem Bildaufnahmegerät (11) ein halbdurchlässiger Spiegel (42; 52) und/oder ein V-förmiger Spiegel (16; 50, 51) angeordnet ist.

4. Vorrichtung nach Anspruch 3, dadurch gekennzeichnet, dass das Bildaufnahmegerät (11) unterhalb der Behältermitte angeordnet ist.

5. Vorrichtung nach Anspruch 3 oder 4, dadurch gekennzeichnet, dass die Behälterfördereinrichtung (1) ein Förderkarussell umfasst.

6. Vorrichtung nach Anspruch 3, dadurch gekennzeichnet, dass ein Seitenwandabschnitt 60° der Behälterwandung umfasst.

## Claims

1. Process for the inspection of the side wall of a container (2, 3, 4, 5, 6) by its optical imaging and by interpretation of the image picked up by a camera (11), in which a plurality of containers are conveyed along a conveyor path (1) past a series of imaging stations, a segment of the side wall of the respective container being scanned by the camera (11) at each imaging station, and that *[sic]* as the individual containers are being conveyed they are turned so that a different segment of the side wall of each container is scanned at successive imaging stations, a single camera (11) being common to a plurality of imaging stations and scanning the images of the side wall segments of different containers, characterized in that the ray path from each imaging station to the camera (11) is repeatedly deflected and in that, in addition to the said multiple deflection, a semi-reflecting mirror and/or a V-shaped mirror is arranged in the ray path to deflect the images onto the single camera (11).

2. Process according to Claim 1, characterized in that the camera is located underneath the centre of the container.

3. Apparatus for carrying out the process according to Claim 1 or Claim 2, with a container conveyor (1) with means for turning the containers (2, 3, 4, 5, 6), a plurality of imaging stations disposed along the conveyor path in the region of the turning means, and a camera (11) for scanning the images created by the imaging stations of the individual side wall segments of the containers, each imaging station comprising an illuminator device (7, 8), characterized in that the ray path (12, 13, 14) from each imaging station (7, 8) to the camera (11) is repeatedly deflected by means of mirrors (9, 9', 10, 10', 38, 38', 53), and in that, in addition to the said multiple deflection, a semi-reflecting mirror (42; 52) and/or a V-shaped mirror (16; 50, 51) is arranged in front of the camera (11).

4. Apparatus according to Claim 3, characterized in that the camera (11) is located underneath the centre of the container.

5. Apparatus according to Claim 3 or Claim 4, characterized in that the container conveyor (1) comprises a carousel conveyor.

6. Apparatus according to Claim 3, characterized in that a side wall segment comprises 60° of the container wall.

## Revendications

1. Procédé pour examiner la paroi latérale d'un récipient (2,3,4,5,6) moyennant la formation optique de leur image et l'exploitation de l'image enregistrée par un appareil de prise de vues (11), selon lequel on déplace une multiplicité de récipients le long d'une section de convoyage (1) et on les fait passer dans une série de postes de formation d'images et dans chaque poste de formation d'images, une section de la paroi latérale du récipient considéré est enregistrée par l'appareil de prise de vues (11), et selon lequel lors du convoyage des récipients, ces derniers sont entraînés chacun en rotation de sorte qu'une autre section de la paroi latérale de chaque récipient est respectivement enregistrée dans des postes successifs de formation d'images, l'appareil de prise de vues (11) étant commun pour plusieurs postes de formation d'images, et enregistrant l'image des sections de parois latérales de différents récipients, caractérisé en ce que le trajet du faisceau depuis le poste de formation d'images respectif jusqu'à l'appareil de prise de vues (11) est dévié de façon multiple et qu'en plus de ladite déviation multiple, un miroir semi-transparent et/ou un miroir en forme de V est disposé dans le trajet du rayonnement, ce qui a pour effet que des images sont déviées en direction de l'appareil de prise de vues (11).

2. Procédé selon la revendication 1, caractérisé en ce que l'appareil de prise de vues est disposé au-dessous du centre du récipient.

3. Dispositif pour la mise en oeuvre du procédé selon l'une des revendications 1 ou 2, comportant un dispositif (1) de convoyage de récipients comportant des moyens pour entraîner en rotation les récipients (2,3,4,5,6), une multiplicité de postes de formation d'images disposés le long du trajet de convoyage dans la zone des moyens d'entraînement en rotation, et un appareil de prise de vues (11) pour enregistrer l'image, produite par les postes de formation d'images, de la section respective de paroi latérale des récipients, et dans lequel les postes de formation d'images comprennent respectivement un dispositif d'éclairement (7,8), caractérisé en ce que le trajet du rayonnement (12,13,14) depuis le poste respectif de formation d'images (7,8) jusqu'à l'appareil de prise de vues (11) est dévié de façon multiple à l'aide de miroirs (9,9',10,10', 38,38',53), et qu'en plus de ladite déviation multiple, un miroir semi-transparent (42;52) et/ou un miroir en V (16;50,51) est disposé en amont de l'appareil de prise de vues (11).

4. Dispositif selon la revendication 3, caractérisé en ce que l'appareil de prise de vues (11) est disposé au-dessous du centre du récipient.

5. Dispositif selon la revendication 3 ou 4, caractérisé en ce que le dispositif (1) de convoyage des récipients comprend un carrousel de convoyage.

6. Dispositif selon la revendication 3, caractérisé en ce qu'une section de paroi latérale s'étend sur 60° de la paroi du récipient.
